# EUROPEAN PATENT APPLICATION

(11) **EP 4 398 336 A1**
(43) Date of publication of application: **10.07.2024**
(21) Application number: 21955282.5
(22) Date of filing: 02.09.2021
(51) Int. Cl.: H01M 4/36, H01M 4/58, H01M 10/0562

(54) **POSITIVE ELECTRODE MATERIAL FOR ELECTRIC DEVICES, AND POSITIVE ELECTRODE FOR ELECTRIC DEVICES AND ELECTRIC DEVICE EACH USING SAME**

(71) Applicant: NISSAN MOTOR CO., LTD., Kanagawa 221-0023 (JP); Renault s.a.s, 92100 Boulogne Billancourt (FR)
(72) Inventor: ITO, Atsushi, Atsugi-shi, Kanagawa 243-0123 (JP); FUJIMOTO, Misaki, Atsugi-shi, Kanagawa 243-0123 (JP); OGIHARA, Wataru, Atsugi-shi, Kanagawa 243-0123 (JP); OOTANI, Issei, Atsugi-shi, Kanagawa 243-0123 (JP); LI, Zhenguang, Atsugi-shi, Kanagawa 243-0123 (JP); ONO, Masaki, Atsugi-shi, Kanagawa 243-0123 (JP); MOROOKA, Masahiro, Atsugi-shi, Kanagawa 243-0123 (JP)
(74) Representative: Grünecker Patent- und Rechtsanwälte PartG mbB
(86) International application number: PCT/IB2021/000602
(87) International publication number: WO 2023/031638

(57) **Abstract**

[Abstract] To provide a means for improving cycle durability of an electric device which uses a positive electrode active material containing sulfur. Provided is a positive electrode material for an electric device which includes composite material particles containing a positive electrode active material containing sulfur in the pores of a porous conductive material, and an electronic conductor which coats the surface of the composite material particles.

## Description

### TECHNICAL FIELD

The present invention relates to a positive electrode material for an electric device, and a positive electrode for an electric device and an electric device using the same.

### BACKGROUND ART

In recent years, in order to fight global warming, there is a strong need for reduction of the amount of carbon dioxide. In the automobile industry, there are increasing expectations for a reduction of carbon dioxide emissions by introduction of electric vehicles (EV) and hybrid electric vehicles (HEV), and development of non-aqueous electrolyte secondary batteries such as secondary batteries for motor driving, which are key to practical application of such vehicles, has been actively conducted.

A secondary battery for motor driving is required to have extremely high output characteristics and high energy as compared with a lithium secondary battery for consumer use used in a mobile phone, a notebook computer, and the like. Therefore, a lithium secondary battery having the highest theoretical energy among all practical batteries has attracted attention, and is currently being rapidly developed.

Here, lithium secondary batteries that are currently widespread use a combustible organic electrolyte solution as an electrolyte. In such liquid-based lithium secondary batteries, safety measures against liquid leakage, short circuit, overcharge, and the like are more strictly required than other batteries.

Therefore, in recent years, research and development on an all solid lithium secondary battery using an oxide-based or sulfide-based solid electrolyte as an electrolyte have been actively conducted. The solid electrolyte is a material mainly made of an ion conductor that enables ion conduction in a solid. For this reason, in an all solid lithium secondary battery, in principle, various problems caused by combustible organic electrolyte solution do not occur unlike the conventional liquid-based lithium secondary battery. In general, use of a high-potential and large-capacity positive electrode material and a large-capacity negative electrode material can achieve significant improvement in output density and energy density of a battery. For example, elemental sulfur (S₈) has an extremely large theoretical capacity of about 1670 mAh/g, and has the advantage of being abundant in resources at low cost.

On the other hand, due to low electron conductivity of sulfur and the like, the characteristic that a positive electrode active material containing sulfur has a high capacity cannot be sufficiently utilized at present.

For the purpose of sufficiently utilizing high capacity characteristics of a positive electrode active material such as sulfur simple substance, JP 2014-17241 A, for example, discloses a method for producing a thin-film sulfur-coated conductive carbon including immersing a conductive carbon having a predetermined specific surface area in a sulfur solution and then separating the conductive carbon from the sulfur solution. According to the literature, the obtained thin-film sulfur-coated conductive carbon tends to diffuse electrons and lithium ions inside sulfur, and thus can be used as a positive electrode mixture to provide an all-solid-state lithium sulfur battery having excellent discharge capacity and rate characteristics.

### SUMMARY OF INVENTION

### Technical Problem

However, according to the study of the present inventors, it has been found that when the technique described in JP 2014-17241 A is adopted as a positive electrode material for an electric device, the cycle durability of the electric device to which the positive electrode material is applied cannot be sufficiently ensured.

Therefore, a purpose of the present invention is to provide a means for improving cycle durability of an electric device which used a positive electrode active material containing sulfur.

### Solution to Problem

The present inventors have carried out a diligent study to solve the above problem. As a result, the present inventors have found that the above problem can be solved by coating, with an electronic conductor, the surface of composite material particles in which pores of a porous conductive material are filled with a positive electrode active material containing sulfur, and have completed the present invention.

An embodiment of the present invention is a positive electrode material for an electric device which includes composite material particles containing a positive electrode active material containing sulfur in pores of a porous conductive material, and an electronic conductor which coats the surface of the composite material particles.

### BRIEF DESCRIPTION OF DRAWINGS

Fig. 1 is a perspective view illustrating an appearance of a flat laminate type all solid lithium secondary battery as an embodiment according to the present invention.
Fig. 2 is a cross-sectional view taken along line 2-2 illustrated in Fig. 1.
Fig. 3 is a schematic cross-sectional view of a positive electrode material in the prior art.
Fig. 4 is a schematic cross-sectional view of a positive electrode material according to an embodiment according to the present invention.

### DESCRIPTION OF EMBODIMENTS

An embodiment of the present invention is a positive electrode material for an electric device which includes composite material particles containing a positive electrode active material containing sulfur in pores of a porous conductive material, and an electronic conductor which coats the surface of the composite material particles. With the positive electrode material for an electric device according to the present embodiment, it is possible to improve cycle durability of an electric device that uses a positive electrode active material containing sulfur.

Hereinafter, the embodiments according to the present embodiment described above will be described with reference to the drawings, but the technical scope of the present invention should be determined based on the description of the claims, and is not limited to the following embodiments. The dimensional ratios of the drawings are exaggerated for convenience of description and may differ from the actual ratios. In the present specification, "X to Y" indicating a range means "X or more and Y or less". In addition, unless otherwise specified, operation and measurement of physical properties and the like are performed under the conditions of room temperature (20 to 25°C) and relative humidity of 40 to 50%RH.

In the following description, the present invention will be described using a laminate type (internally parallel connection type) all solid lithium secondary battery, which is an embodiment of an electric device, as an example. As described above, the solid electrolyte constituting the all solid lithium secondary battery is a material mainly made of an ion conductor that enables ion conduction in a solid. For this reason, in an all solid lithium secondary battery, there is an advantage that, in principle, various problems caused by combustible organic electrolyte solution do not occur unlike the conventional liquid-based lithium secondary battery. In general, there is also an advantage that use of a high-potential and large-capacity positive electrode material and a large-capacity negative electrode material can achieve significant improvement in output density and energy density of a battery.

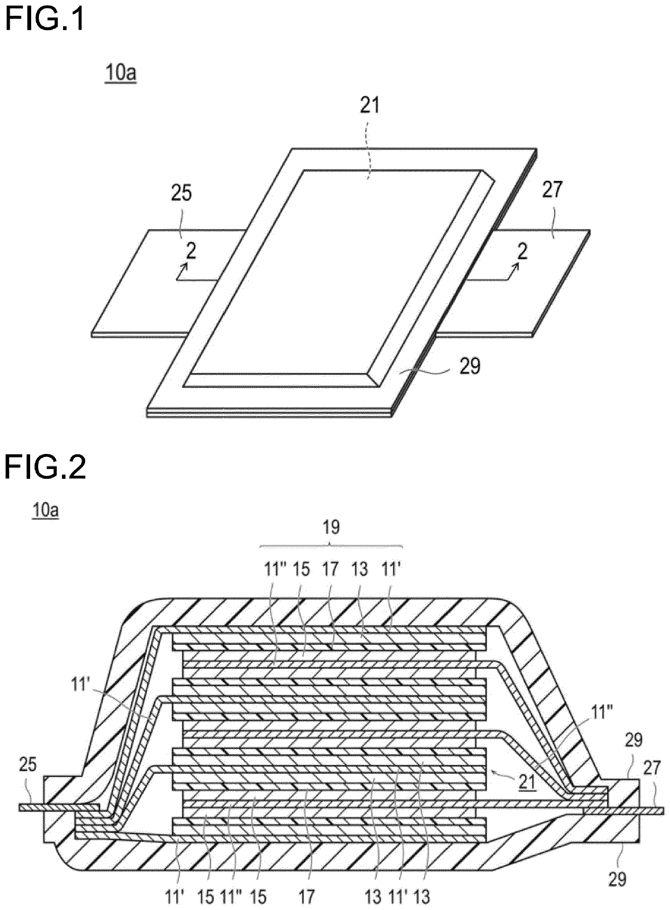

Fig. 1 is a perspective view illustrating an appearance of a flat laminate type all solid lithium secondary battery as an embodiment according to the present invention. Fig. 2 is a cross-sectional view taken along line 2-2 illustrated in Fig. 1. The battery is formed into the laminate type, thereby allowing the battery to be compact and have a high capacity. In the present specification, the embodiment will be described by taking, as an example, a case where a secondary battery is a flat laminate type (non-bipolar type) all solid lithium secondary battery illustrated in Figs. 1 and 2 (hereinafter also simply referred to as "laminate type battery").

As illustrated in Fig. 1, a laminate type battery 10a has a rectangular flat shape, and a negative electrode current collecting plate 25 and a positive electrode current collecting plate 27 for extracting electric power are extended from both sides of the battery. A power-generating element 21 is wrapped in a battery outer casing material (laminate film 29) of the laminate type battery 10a, and the periphery of the battery outer casing material is heat-sealed, and the power-generating element 21 is hermetically sealed in a state where the negative electrode current collecting plate 25 and the positive electrode current collecting plate 27 are extended to the outside.

As illustrated in Fig. 2, the laminate type battery 10a of the present embodiment has a structure in which the flat and substantially rectangular power-generating element 21 in which a charge and discharge reaction actually proceeds is sealed inside the laminate film 29 as the battery outer casing material. Here, the power-generating element 21 has a configuration in which a positive electrode, a solid electrolyte layer 17, and a negative electrode are laminated. The positive electrode has a structure in which a positive electrode active material layer 15 containing a positive electrode active material is disposed on both surfaces of a positive electrode current collector 11". The negative electrode has a structure in which a negative electrode active material layer 13 containing a negative electrode active material is disposed on both surfaces of a negative electrode current collector 11'. Thus, the positive electrode, solid electrolyte layer, and negative electrode that are adjacent constitute one single battery layer 19.

The negative electrode current collector 11' and the positive electrode current collector 11" have a structure in which a negative electrode current collecting plate (tab) 25 and a positive electrode current collecting plate (tab) 27 which are electrically connected to the respective electrodes (the positive electrode and the negative electrode) are respectively attached to the negative electrode current collector 11' and the positive electrode current collector 11" and are led to an outside of the laminate film 29 so as to be sandwiched between ends of the laminate film 29 as the outer casing material. The positive electrode current collecting plate 27 and the negative electrode current collecting plate 25 may be attached to the positive electrode current collector 11" and the negative electrode current collector 11' of the respective electrodes with a positive electrode lead and a negative electrode lead (not illustrated) interposed therebetween, respectively by ultrasonic welding, resistance welding, or the like as necessary.

Hereinafter, main constituent members of the all solid lithium secondary battery according to the present embodiment will be described.

### [Current Collector]

A current collector has a function of mediating transfer of electrons from electrode active material layers. The material constituting the current collector is not particularly limited, and, for example, a metal or a resin having conductivity can be adopted. Note that, as long as a negative electrode active material layer and a positive electrode active material layer to be described later have conductivity by themselves and can have a current collecting function, a current collector as a member different from these electrode active material layers is not necessarily used.

### [Negative Electrode (Negative Electrode Active Material Layer)]

In the laminate type battery according to the embodiment illustrated in Figs. 1 and 2, the negative electrode active material layer 13 contains a negative electrode active material. The type of the negative electrode active material is not particularly limited, and examples thereof include a carbon material, a metal oxide, and a metal active material. In addition, a silicon-based negative electrode active material or a tin-based negative electrode active material may be used as the negative electrode active material. Here, silicon and tin belong to a Group 14 element, and are known to be a negative electrode active material that can greatly improve the capacity of a lithium secondary battery. Since simple substances of silicon and tin can occlude and release a large number of charge carriers (lithium ions and the like) per unit volume (mass), they become a high-capacity negative electrode active material. Furthermore, as the negative electrode active material, a metal containing lithium may be used. Such a negative electrode active material is not particularly limited as long as it is an active material containing lithium, and examples thereof include lithium-containing alloys in addition to metal lithium. Examples of the lithium-containing alloys include an alloy of Li and at least one of In, Al, Si, and Sn. The negative electrode active material preferably contains metal lithium or a lithium-containing alloy, a silicon-based negative electrode active material, or a tin-based negative electrode active material, and particularly preferably contains metal lithium or a lithium-containing alloy. Note that when metal lithium or a lithium-containing alloy is used as the negative electrode active material, the lithium secondary battery as an electric device can be a so-called lithium-deposition type in which metal lithium as the negative electrode active material is deposited on the negative electrode current collector in a charging process. Therefore, in such a form, the thickness of the negative electrode active material layer increases with the progress of the charging process, and the thickness of the negative electrode active material layer decreases with the progress of the discharging process. The negative electrode active material layer may not be present at the time of complete discharge, but, in some cases, a negative electrode active material layer made of some amount of metal lithium may be disposed at the time of complete discharge.

The content of the negative electrode active material in the negative electrode active material layer is not particularly limited, but for example, is preferably within a range of 40 to 99 mass%, and more preferably within a range of 50 to 90 mass%.

Preferably, the negative electrode active material layer further contains a solid electrolyte. The negative electrode active material layer contains the solid electrolyte, as a result of which the ion conductivity of the negative electrode active material layer can be improved. Examples of the solid electrolyte include a sulfide solid electrolyte and an oxide solid electrolyte, and a sulfide solid electrolyte is preferred.

Examples of the sulfide solid electrolyte include LiI-Li₂S-SiS₂, LiI-Li₂S-P₂O₅, LiI-Li₃PO₄-P₂S₅, Li₂S-P₂S₅, LiI-Li₃PS₄, LiI-LiBr-Li₃PS₄, Li₃PS₄, Li₂SP₂S₅-LiI, Li₂S-P₂S₅-Li₂O, Li₂S-P₂S₅-Li₂OLiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZmSn (where m and n are positive numbers, and Z is any of Ge, Zn, and Ga), Li₂S-GeS₂, Li₂S-SiS₂-Li₃PO₄, Li₂S-SiS₂-LixMOy (where x and y are positive numbers, and M is any of P, Si, Ge, B, Al, Ga, and In), and the like. The description of "Li₂S-P₂S₅" means a sulfide solid electrolyte obtained by using a raw material composition containing Li₂S and P₂S₅, and the same applies to other descriptions.

The sulfide solid electrolyte may have, for example, a Li₃PS₄ skeleton, a Li₄P₂S₇ skeleton, or a Li₄P₂S₆ skeleton. Examples of the sulfide solid electrolyte having a Li₃PS₄ skeleton include LiI-Li₃PS₄, LiI-LiBr-Li₃PS₄, and Li₃PS₄. Examples of the sulfide solid electrolyte having a Li₄P₂S₇ skeleton include a Li-P-S-based solid electrolyte called LPS (e.g., Li₇P₃S₁₁). As the sulfide solid electrolyte, for example, LGPS expressed by Li₍₄₋ₓ₎Ge₍₁₋ₓ₎PₓS₄ (x satisfies 0 < x < 1) or the like may be used. Above all, the sulfide solid electrolyte contained in the active material layer is preferably a sulfide solid electrolyte containing a P element, and the sulfide solid electrolyte is more preferably a material containing Li₂S-P₂S₅ as a main component. Furthermore, the sulfide solid electrolyte may contain halogen (F, Cl, Br, I). In a preferred embodiment, the sulfide solid electrolyte is Li₆PS₅X (where X is Cl, Br or I, preferably Cl).

The ion conductivity (e.g., Li ion conductivity) of the sulfide solid electrolyte at a normal temperature (25°C) is, for example, preferably 1×10⁻⁵ S/cm or more, and more preferably 1×10⁻⁴ S/cm or more. A value of the ion conductivity of the solid electrolyte can be measured by an AC impedance method.

Examples of the oxide solid electrolyte include a compound having a NASICON-type structure, and the like. Other examples of the oxide solid electrolyte include LiLaTiO (e.g., Li_{0.34}La_{0.51}TiO₃), LiPON (e.g., Li_{2.9}PO_{3.3}N_{0.46}), LiLaZrO (e.g., Li₇La₃Zr₂O₁₂), and the like.

The content of the solid electrolyte in the negative electrode active material layer is, for example, preferably within a range of 1 to 60 mass%, and more preferably within a range of 10 to 50 mass%.

The negative electrode active material layer may further contain at least one of a conductive aid and a binder in addition to the negative electrode active material and the solid electrolyte described above.

The thickness of the negative electrode active material layer varies depending on the configuration of the intended lithium secondary battery, but is preferably, for example, within a range of 0.1 to 1000 um.

### [Solid Electrolyte Layer]

In the laminate type battery according to the embodiment illustrated in Figs. 1 and 2, the solid electrolyte layer is a layer that is interposed between the positive electrode active material layer and negative electrode active material layer described above and essentially contains a solid electrolyte. The specific form of the solid electrolyte contained in the solid electrolyte layer is not particularly limited, and the examples and preferred forms described in the section of the negative electrode active material layer can be similarly adopted. The solid electrolyte layer may further contain a binder in addition to the specific solid electrolyte described above.

The thickness of the solid electrolyte layer varies depending on the configuration of the intended lithium secondary battery, but is preferably 600 um or less, more preferably 500 um or less, and still more preferably 400 um or less from the viewpoint that the volume energy density of the battery can be improved. Meanwhile, the lower limit value of the thickness of the solid electrolyte layer is not particularly limited, but is preferably 1 um or more, more preferably 5 um or more, and still more preferably 10 um or more.

### [Positive Electrode Active Material Layer]

In the laminate type battery according to the embodiment illustrated in Figs. 1 and 2, the positive electrode active material layer contains a positive electrode material for an electric device according to an embodiment of the present invention. The positive electrode material for an electric device includes composite material particles containing a positive electrode active material containing sulfur in pores of a porous conductive material, and an electronic conductor which coats the surface of the composite material particles. With this configuration, it is possible to improve cycle durability of an electric device that uses a positive electrode active material containing sulfur. Although the mechanism by which such an excellent effect is achieved by the configuration according to the present embodiment is not completely clear, the following mechanism is presumed. In the following description, a preferred embodiment of such a form will be described with reference to the drawings.

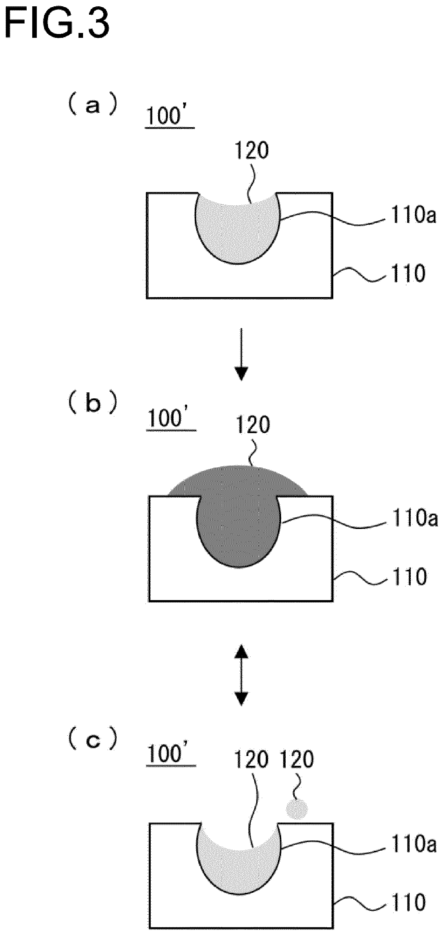

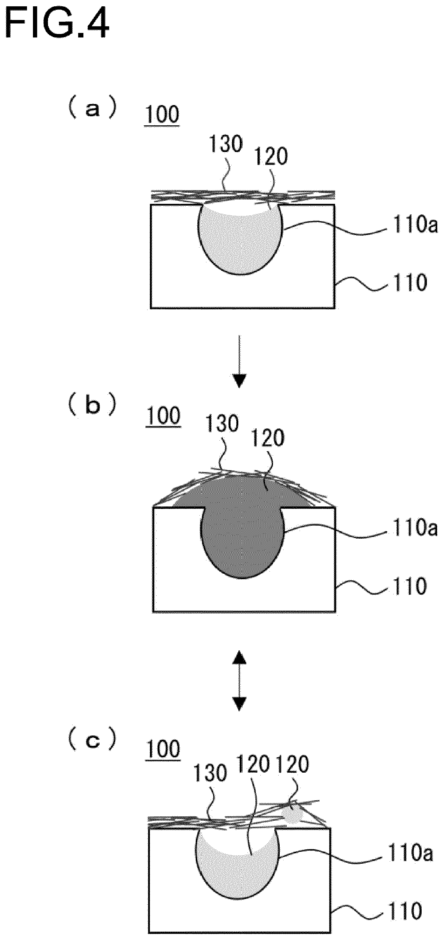

Fig. 3 is a schematic cross-sectional view of a positive electrode material 100' in the prior art. Fig. 4 is a schematic cross-sectional view of a positive electrode material 100 according to an embodiment of the present invention. In Figs. 3 and 4, a porous conductive material (e.g., porous carbon) 110 has a large number of pores 110a. The inside of the pores 110a is filled with a positive electrode active material (e.g., sulfur) 120. Although not illustrated, the positive electrode active material 120 is also disposed on the surface of the porous conductive material 110 other than the pores 110a.

As illustrated in Fig. 3, in the positive electrode material 100' in the prior art, the inside of the pores 110a is filled with the positive electrode active material 120 (state of (a) in Fig. 3). At the time of discharge, the positive electrode active material 120 expands by storing lithium ions. At this time, a part of the positive electrode active material 120 filled in the pores 110a is pushed out of the pores 110a (state of (b) in Fig. 3). At the time of charging, the positive electrode active material 120 contracts by releasing lithium ions. Thus, a part of the positive electrode active material 120 pushed out of the pores 110a is separated away from the surface of the porous conductive material 110, and electrons cannot be transferred (state of (c) in Fig. 3). As described above, by repeating the charge-discharge cycle, the ratio of the positive electrode active material 120 that does not contribute to the charge-discharge reaction increases, and the cycle durability decreases in an electric device to which the positive electrode material 100' is applied.

On the other hand, as illustrated in Fig. 4, in the positive electrode material 100 according to an embodiment of the present invention, the surface of the composite material particles, in which the positive electrode active material 120 is filled inside the pores 110a, is coated with an electronic conductor (e.g., graphene) (state of (a) in Fig. 4). At the time of discharge, the positive electrode active material 120 expands by storing lithium ions. At this time, a part of the positive electrode active material 120 filled in the pores 110a is pushed out of the pores 110a (state of (b) in Fig. 4). At the time of charging, the positive electrode active material 120 contracts by releasing lithium ions. At this time, in the embodiment illustrated in Fig. 4, even if a part of the positive electrode active material 120 pushed out of the pores 110a is separated away from the surface of the porous conductive material 110, a conductive path is formed by the presence of the electronic conductor 130, and electrons can be transferred to and from the separated positive electrode active material 120 (state of (c) in Fig. 4). As a result, even after the charge-discharge cycle is repeated, the ratio of the positive electrode active material 120 that does not contribute to the charge-discharge reaction is suppressed to be low, and the cycle durability is improved in an electric device to which the positive electrode material 100 is applied.

### (Porous conductive material)

The porous conductive material is made of a material having conductivity and has pores (voids) therein. By filling the inside of the pores with a positive electrode active material containing sulfur to be described later, many contacts are formed between the pore walls and the positive electrode active material, and electrons are transferred through the contacts. As a result, it is possible to increase the utilization efficiency of the positive electrode active material containing sulfur having low electron conductivity, and to increase the charge-discharge capacity.

The type of the porous conductive material is not particularly limited, and a carbon material, a metal material, a conductive polymer material, and the like can be appropriately adopted, among which a carbon material is preferred. Examples of the carbon material include carbon particles (carbon carriers) made of activated carbon, carbon black such as Ketjen Black (registered trademark) (highly conductive carbon black), (oil) furnace black, channel black, thermal black, lamp black, and the like, mesoporous carbon, coke, natural graphite, artificial graphite, and the like. Among them, at least one selected from a group consisting of activated carbon, carbon black, and mesoporous carbon is preferred, and at least one selected from a group consisting of activated carbon and mesoporous carbon is more preferred. Since these carbon materials have a sufficient pore size to be easily filled with the positive electrode active material containing sulfur. The carbon materials preferably contain carbon as a main component. Here, the phrase "the main component is carbon" means that carbon atoms are contained as a main component, and is a concept including both of being composed solely of carbon atoms and being composed substantially of carbon atoms. The phrase "composed substantially of carbon atoms" means that impurities of about 2 to 3 mass% or less can be allowed to be mixed.

The BET specific surface area of the porous conductive material (preferably, a carbon material) is preferably 200 m²/g or more, more preferably 500 m²/g or more, still more preferably 800 m²/g or more, particularly preferably 1200 m²/g or more, and most preferably 1500 m²/g or more. In addition, the pore volume of the porous conductive material is preferably 1.0 mL/g or more, more preferably 1.3 mL/g or more, and still more preferably 1.5 mL/g or more. When the BET specific surface area and the pore volume of the porous conductive material are within the above ranges, a sufficient amount of pores can be retained, and thus sufficient amounts of the positive electrode active material can be retained. Note that the BET specific surface area and the pore volume of the porous conductive material can be measured by nitrogen adsorption/desorption measurement. This nitrogen adsorption/desorption measurement is performed using BELSORP mini manufactured by MicrotracBEL Corp., and is performed by a multipoint method at a temperature of -196°C. The BET specific surface area is determined from adsorption isotherms in the range of relative pressure of 0.01 < P/Po < 0.05. In addition, the pore volume is determined from the volume of the adsorption N₂ at a relative pressure of 0.96.

The pore size (average pore size) of the porous conductive material is not particularly limited, but the lower limit is preferably 0.5 nm or more, more preferably 1 nm or more, still more preferably 2 nm or more, and particularly preferably 5 nm or more. The upper limit is preferably 500 nm or less, more preferably 100 nm or less, still more preferably 50 nm or less, and particularly preferably 30 nm or less. When the pore size is within the above range, electrons can be sufficiently supplied to the active material present at a position separated away from the pore wall among the positive electrode active material containing sulfur disposed inside the pores. Note that the pore size of the porous conductive material can be calculated by nitrogen adsorption/desorption measurement by the same method as described above.

The average particle size (primary particle size) when the porous conductive material is particulate is not particularly limited, but is preferably 2 to 50 um, more preferably 2 to 20 um, and still more preferably 5 to 10 um. Note that, in the present specification, the "particle size" means the maximum distance L among the distances between any two points on the contour line of the particle. As the value of the "average particle size", a value calculated as an average value of particle sizes of particles observed in several to several tens of fields of view (e.g., the average value of the particle sizes of 100 particles) using an observation means such as a scanning electron microscope (SEM) or a transmission electron microscope (TEM) is adopted.

### (Positive Electrode Active Material)

The positive electrode material according to the present embodiment essentially contains a positive electrode active material containing sulfur as the positive electrode active material. The type of the positive electrode active material containing sulfur is not particularly limited, and examples thereof include particles or a thin film of an organic sulfur compound or an inorganic sulfur compound in addition to sulfur simple substance (S) and lithium sulfide (Li₂S). Any material may be used as long as the material can release lithium ions during charging and occlude lithium ions during discharging by utilizing the oxidation-reduction reaction of sulfur. In particular, the inorganic sulfur compound is preferred because it is excellent in stability, and specific examples thereof include sulfur simple substance (S), TiS₂, TiS₂, TiS₄, NiS, NiS₂, CuS, FeS₂, Li₂S, MoS₂, MoS₃, MnS, MnS₂, CoS, CoS₂, and the like. Among the compounds, S, Li₂S, S-carbon composite, TiS₂, TiS₂, TiS₄, FeS₂ and MoS₂ are preferred, sulfur simple substance (S) and lithium sulfide (Li₂S), TiS₂, and FeS₂ are more preferred, and sulfur simple substance (S) and lithium sulfide (Li₂S) are particularly preferred from the viewpoint of high capacity.

The positive electrode material according to the present embodiment may further contain a sulfur-free positive electrode active material in addition to the positive electrode active material containing sulfur. However, a ratio of a content of the positive electrode active material containing sulfur to a total amount of 100 mass% of the positive electrode active material is preferably 50 mass% or more, more preferably 70 mass% or more, still more preferably 80 mass% or more, yet still more preferably 90 mass% or more, particularly preferably 95 mass% or more, and most preferably 100 mass .

### (Electronic conductor)

The positive electrode material according to the present embodiment essentially contains an electronic conductor. By coating the surface of the composite material particles with the electronic conductor, electrons can be transferred to and from the positive electrode active material separated away from the surface of the porous conductive material by charging and discharging. As a result, even after the charge-discharge cycle is repeated, the ratio of the positive electrode active material that does not contribute to the charge-discharge reaction is suppressed to be low, and the cycle durability is improved in an electric device to which the positive electrode material is applied.

The type of the electronic conductor is not particularly limited as long as it has electron conductivity higher than that of the positive electrode active material containing sulfur, but is preferably at least one selected from conductive carbon, metal, metal oxide, metal sulfide, and conductive polymer. Examples of the conductive carbon include carbon fiber, graphene, carbon nanotube (single-walled carbon nanotube and multi-walled carbon nanotube), carbon nanohorn, carbon nanoballoon, fullerene, and the like. Examples of the metal include nickel, titanium, aluminum, copper, platinum, iron, chromium, tin, zinc, indium, antimony, and vanadium, or an alloy containing at least one of these metals, and the like. Here, examples of the alloy include stainless steel (SUS), Inconel (registered trademark), Hastelloy (registered trademark), other Fe-Cr-based alloys, and Ni-Cr alloys. Examples of the metal oxide include titanium oxide (TiO₂), zinc oxide (ZnO), indium oxide (In₂O₃), tin oxide (SnO₂), and indium tin oxide (Indium Tin Oxide; ITO), vanadium oxide (V₂O₅), triiron tetraoxide (Fe₃O₄), zirconium oxide (ZrO₂), tungsten oxide (IV) (WO₂), and the like. Examples of the metal sulfide include iron sulfide (FeS), copper sulfide (I) (Cu₂S), cadmium sulfide (CdS), indium sulfide (III) (In₂S₃), and the like. Examples of the conductive polymer include carbon polysulfide, polyaniline, polypyrrole, polythiophene (e.g., poly 3,4-ethylenedioxythiophene (PDOT)), polyacetylene, polyparaphenylene, polyphenylenevinylene, polyacrylonitrile, polyoxadia, and the like. Among these materials, because of high electron conductivity, at least one selected from a group consisting of conductive carbon and conductive polymer is preferred, at least one selected from a group consisting of conductive carbon is more preferred, carbon fiber, graphene, and carbon nanotube (single-walled carbon nanotube and multi-walled carbon nanotube) are still more preferred, and graphene is particularly preferred.

The shape of the electronic conductor is not particularly limited, and a particulate shape, a fibrous shape, a sheet shape, or the like can be appropriately adopted, but is preferably a fibrous shape or a sheet shape from the viewpoint of favorably coating the surface of the composite material particles. In addition, the size of the electronic conductor is also not particularly limited, but from the viewpoint of favorably coating the surface of the composite material particles, the preferred size of the electronic conductor is as follows.

(1) When the shape of the electronic conductor is a fibrous shape (e.g., carbon fiber, carbon nanotube), the ratio of the pore size of the porous conductive material to the average fiber length of the fibrous electronic conductor is preferably more than 0 and less than 1, more preferably more than 0 and 0.1 or less, still more preferably more than 0 and 0.01 or less, and particularly preferably 0.0001 or more and 0.01 or less; or
(2) The shape of the electronic conductor is a sheet shape, and the ratio of the pore size of the porous conductive material to the average longest diameter of the sheet-shaped electronic conductor in the surface direction is preferably more than 0 and less than 1, more preferably more than 0 and 0.1 or less, still more preferably more than 0 and 0.01 or less, and particularly preferably 0.0001 or more and 0.01 or less.

The phrase "the shape of the electronic conductor is a fibrous shape" means that the average value of aspect ratios (major axis length/minor axis length) of the electronic conductor observed in several to several tens of fields of view using an observation means such as SEM or TEM is 5 or more. Note that, the average value here is, for example, an average value of 100 electronic conductors when the electronic conductors have a particulate shape or fibrous shape. The phrase "the shape of the electronic conductor is a sheet shape" means that the "ratio of the major axis in the surface direction to the thickness" and the "ratio of the minor axis in the surface direction to the thickness" observed using an observation means such as SEM or TEM are each at least 100 or more.

As the value of the "average fiber length of the fibrous electronic conductor", a value calculated as an average value of long axis lengths of the fibrous electronic conductor (e.g., the average value of the lengths of the major axes of 100 fibers) observed in several to several tens of fields of view using an observation means such as SEM or TEM is adopted. As the value of the "average thickness of the sheet-shaped electronic conductor", a value calculated as the average longest diameter of the sheet-shaped electronic conductor in the surface direction (e.g., the average value of the average longest diameters of 100 sheets in the surface direction) observed in several to several tens of fields of view using an observation means such as SEM or TEM is adopted.

In the positive electrode material according to the present embodiment, the mass ratio of the electronic conductor to the porous conductive material is preferably more than 0 and less than 1, more preferably 0.01 or more and 0.5 or less, and still more preferably 0.1 or more and 0.5 or less. When the mass ratio is more than 0, the utilization efficiency of the positive electrode active material containing sulfur can be further improved. When the ratio is less than 1, the decrease in charge/discharge capacity can be suppressed.

### (Electrolyte)

The positive electrode material according to the present embodiment preferably further contains an electrolyte in the pores of the porous conductive material. By containing an electrolyte, charge carriers smoothly move in and out of the surface of the positive electrode active material containing sulfur, and output characteristics can be improved. The specific form of the electrolyte is not particularly limited, and a solid electrolyte such as the sulfide solid electrolyte, the oxide solid electrolyte, or the like described in the sections of the liquid electrolyte and the negative electrode active material layer can be appropriately adopted, but a solid electrolyte is preferred. When the electrolyte is a solid electrolyte, it is preferred that at least a part of the solid electrolyte and at least a part of the positive electrode active material containing sulfur are disposed inside the pores of the porous conductive material to be in contact with each other.

Among them, the solid electrolyte contained in the positive electrode material according to the present embodiment is preferably a sulfide solid electrolyte. In another preferred embodiment, the sulfide solid electrolyte contains alkali metal atoms. Here, examples of the alkali metal atoms that can be contained in the sulfide solid electrolyte include lithium atoms, sodium atoms, and potassium atoms, among which lithium atoms are preferred because of their excellent ionic conductivity. In still another preferred embodiment, the solid electrolyte contained in the solid electrolyte layer contains alkali metal atoms (e.g., lithium atoms, sodium atoms, or potassium atoms; preferably lithium atoms) and phosphorus atoms and/or boron atoms. In a preferred embodiment, the sulfide solid electrolyte is Li₆PS₅X (where X is Cl, Br or I, preferably Cl). Since these solid electrolytes have high ionic conductivity, they can particularly effectively contribute to improvement of output characteristics.

An example of a method for producing a positive electrode material having the above configuration according to the present embodiment will be described. As described above, it is presumed that the positive electrode material according to the present embodiment contributes to excellent cycle durability because a conductive path is favorably formed by coating the surface of the composite material particles with the electronic conductor. In order to achieve such a configuration, first, composite material particles are produced by the following method. First, the porous conductive material and the positive electrode active material containing sulfur are sufficiently mixed by a mixing treatment using a mixing means such as a mortar or the like or a milling treatment using a grinding means such as a planetary ball mill or the like. Thereafter, the obtained mixture is heat-treated at a high temperature. The positive electrode active material containing sulfur is melted by the heat treatment, and the positive electrode active material is filled in the pores of the porous conductive material. At this time, the temperature of the heat treatment is not particularly limited, but is preferably 170°C or higher, more preferably 175°C or higher, still more preferably 180°C or higher, and particularly preferably 185°C or higher. On the other hand, the upper limit value of the heat treatment temperature is also not particularly limited, but is, for example, 250°C or lower, and preferably 200°C or lower. In addition, the heat treatment time is not particularly limited, and may be about 1 to 5 hours.

As a production method when the composite material particles further contains a solid electrolyte (e.g., a sulfide solid electrolyte) in the pores of the porous conductive material, a method may be adopted in which a mixture of the porous conductive material and the solid electrolyte is obtained by a mixing treatment or a milling treatment, then the heat treatment described above is performed in a state where the positive electrode active material containing sulfur is additionally added to the mixture. With such a method, the positive electrode active material and the solid electrolyte enter the inside of the pores of the porous conductive material having the pores by the heat treatment, and a positive electrode material in a preferred form in which a large number of three-phase interfaces are formed can be obtained. In addition, as another production method, a solution of the solid electrolyte dissolved in an appropriate solvent capable of dissolving the solid electrolyte is prepared first, then the porous conductive material is impregnated into the solution, and the solution is heated to a temperature of about 100 to 180°C for about 1 to 5 hours as needed, whereby a solid electrolyte impregnated porous conductive material can be obtained. In this composite, the solid electrolyte usually enters and adheres to the inside of the pores of the porous conductive material. Next, by subjecting the composite to the heat treatment described above in a state where the positive electrode active material containing sulfur is additionally added, the positive electrode active material is melted to allow the positive electrode active material to enter the inside of the pores of the porous conductive material, and composite material particles in a preferred form in which a large number of three-phase interfaces are formed can be obtained. With the production method adopting a wet process, composite material particles particularly excellent in initial capacity characteristics and charge-discharge rate characteristics can be obtained.

Next, the surface of the composite material particles obtained by the above production method is coated with the electronic conductor. The coating method is not particularly limited, but it is preferred to adopt a mechanofusion method using a ball mill or the like. By such dry coating, the electronic conductor is physically adsorbed onto the surface of the composite material particles, whereby a coating film containing the electronic conductor is formed on the surface of the composite material particles. As another method, a coating may be formed by coating the surface of the composite material particles with a mixture of the electronic conductor and a binder.

The content of the positive electrode active material in the positive electrode active material layer is not particularly limited, but, for example, is preferably within a range of 35 to 99 mass%, more preferably within a range of 40 to 90 mass%. The value of the content is calculated based on the mass of only the positive electrode active material excluding the porous conductive material and the solid electrolyte.

In addition, the positive electrode active material layer may further contain a conductive aid (one in which the positive electrode active material and the solid electrolyte are not retained inside the pores) and/or a binder. Similarly, the positive electrode active material layer preferably further contains a solid electrolyte separately from the positive electrode material described above.

The thickness of the positive electrode active material layer varies depending on the configuration of the intended lithium secondary battery, but is preferably, for example, within a range of 0.1 to 1000 um.

### [Positive Electrode Current Collecting Plate and Negative Electrode Current Collecting Plate]

A material constituting the current collecting plates (25 and 27) is not particularly limited, and a known highly conductive material conventionally used as a current collecting plate for a secondary battery can be used. As the material constituting the current collecting plates, for example, a metal material such as aluminum, copper, titanium, nickel, stainless steel (SUS), or an alloy thereof is preferred. From the viewpoint of weight reduction, corrosion resistance, and high conductivity, aluminum and copper are more preferred, and aluminum is particularly preferred. An identical material or different materials may be used for the positive electrode current collecting plate 27 and the negative electrode current collecting plate 25.

### [Positive Electrode Lead and Negative Electrode Lead]

Although not illustrated, the current collector and the current collecting plate may be electrically connected with a positive electrode lead or a negative electrode lead interposed therebetween. As the material constituting the positive electrode lead and the negative electrode lead, a material used in a known secondary battery can be similarly adopted. The portion taken out from an outer casing is preferably covered with a heat resistant and insulating heat shrinkable tube or the like so as not to affect a product (e.g., an automotive component, particularly an electronic device, or the like) due to electric leakage caused by contact with peripheral devices, wiring lines, or the like.

### [Battery Outer Casing Material]

As the battery outer casing material, a known metal can case can be used, and a bag-shaped case using the aluminum-containing laminate film 29, which can cover a power-generating element as illustrated in Figs. 1 and 2, can be used. As the laminate film, for example, a laminate film or the like having a three-layer structure formed by laminating PP, aluminum, and nylon can be used, but the laminate film is not limited thereto. The laminate film is desirable from the viewpoint of high output and excellent cooling performance, and suitable application for batteries for large devices for EV and HEV. Further, from the perspective of easy adjustment of a group pressure applied to the power-generating element from an outside, the outer casing body is more preferably a laminate film containing aluminum.

The laminate type battery according to the present embodiment has a configuration in which a plurality of single battery layers is connected in parallel, and thus has a high capacity and excellent cycle durability. Therefore, the laminate type battery according to the present embodiment is suitably used as a power source for driving EV and HEV.

Although the all solid lithium secondary battery, which is an embodiment of an electric device, has been described above, the present invention is not limited to only the configurations described in the above-described embodiment, and can be appropriately changed based on the description of the claims.

For example, the type of electric device to which the positive electrode material according to the present embodiment is applied is a bipolar type (bipolar type) battery including a bipolar electrode having a positive electrode active material layer electrically coupled to one surface of a current collector and a negative electrode active material layer electrically coupled to an opposite surface of the current collector.

The electric device according to the present embodiment may not be an all-solid-state lithium secondary battery. Hence, the solid electrolyte layer may further contain a conventionally known liquid electrolyte (electrolyte solution). The amount of the liquid electrolyte (electrolyte solution) that can be contained in the solid electrolyte layer is not particularly limited, but is preferably such an amount that the shape of the solid electrolyte layer formed by the solid electrolyte is maintained and liquid leakage of the liquid electrolyte (electrolyte solution) does not occur.

The lithium secondary battery to which the positive electrode material according to the present embodiment is applied is not limited to a laminate type flat shape. A wound type lithium secondary battery is not particularly limited, and may have a cylindrical shape, or may have a rectangular flat shape obtained by deforming such a cylindrical shape, for example.

### [Assembled Battery]

An assembled battery is one configured by connecting a plurality of batteries. In detail, the assembled battery is one configured by serializing, parallelizing, or both serializing and parallelizing at least two or more batteries. It is possible to freely adjust the capacity and the voltage by serializing and parallelizing the batteries.

A plurality of batteries may be connected in series or in parallel to form an attachable and detachable compact assembled battery. Further, a plurality of such attachable and detachable compact assembled batteries may be connected in series or in parallel to form an assembled battery (such as a battery module or a battery pack) having a large capacity and a large output suitable for a power source for driving a vehicle and an auxiliary power source which require a high volume energy density and a high volume output density. How many batteries are connected to produce an assembled battery and how many stages of compact assembled batteries are laminated to produce a large-capacity assembled battery may be determined according to a battery capacity or output of a vehicle (electric vehicle) on which the assembled battery is to be mounted.

### [Vehicle]

A battery or an assembled battery formed by combining a plurality of batteries can be mounted on a vehicle. In the present invention, a long-life battery having excellent long-term reliability can be configured, and thus mounting such a battery can provide a plug-in hybrid electric vehicle having a long EV traveling distance or an electric vehicle having a long one charge traveling distance. This is because a long-life and highly reliable automobile is provided when a battery or an assembled battery formed by combining a plurality of batteries is used, for example, for a hybrid vehicle, a fuel cell vehicle, or an electric vehicle (each encompasses a four-wheeled vehicle (a passenger car, a commercial car such as a truck or a bus, a light vehicle, and the like), a two-wheeled vehicle (motorcycle), and a three-wheeled vehicle) in the case of an automobile. However, the application is not limited to automobiles, and for example, the present invention can also be applied to various power sources of other vehicles, for example, movable bodies such as trains and can also be used as a mounting power source of an uninterruptible power system or the like.

### Examples

Hereinbelow, the present invention will be described in more detail with reference to Examples. However, the technical scope of the present invention is not limited to the following Examples.

### <Production Example of Test Cell>

### [Example 1]

### (Preparation of Solid Electrolyte Impregnated Porous conductive material)

In a glove box with an argon atmosphere at a dew point of -68°C or lower, 0.500 g of a solid electrolyte (Li₆PS₅Cl manufactured by Ampcera Inc.) was added to 100 mL of super dehydrated ethanol (manufactured by FUJIFILM Wako Pure Chemical Corporation), and sufficiently stirred to dissolve the solid electrolyte in ethanol. To the obtained solid electrolyte ethanol solution, 1.00 g of porous conductive material (porous carbon, average particle size of 5 um, pore size of 30 nm) was added, and well stirred to sufficiently disperse the porous conductive material in the solution. The container containing the dispersion liquid was connected to a vacuum apparatus, and the inside of the container was depressurized to less than 1 Pa by an oil rotary pump while stirring the dispersion in the container with a magnetic stirrer. Since ethanol as a solvent was volatilized under reduced pressure, the ethanol was removed with the lapse of time, and the porous conductive material impregnated with the solid electrolyte remained in the container. In this manner, a solid electrolyte impregnated porous conductive material was prepared by removing the ethanol under reduced pressure, then heating the remaining to 180°C under reduced pressure, and performing heat treatment for 3 hours.

### (Preparation of Composite material particles)

In a glove box with an argon atmosphere at a dew point of -68°C or lower, to 0.750 g of the solid electrolyte impregnated porous conductive material prepared above, 2.50 g of sulfur (manufactured by Sigma-Aldrich Co. LLC) as a positive electrode active material was added and sufficiently mixed in an agate mortar, and then the mixed powder was placed in a sealed pressure-resistant autoclave container and heated at 170°C for 3 hours to melt the sulfur and to impregnate the solid electrolyte impregnated porous conductive material with the sulfur. Thus, composite material particles in which the sulfur and the solid electrolyte were filled in the pores of the porous conductive material were prepared.

### (Preparation of Positive Electrode Material)

In a glove box with an argon atmosphere at a dew point of -68°C or lower, the composite material particles prepared above and an electronic conductor (graphene, average longest diameter in surface direction of 5 um) were blended so that the mass ratio of the electronic conductor to the porous conductive material in the composite material particles was 0.01, and dry coating was performed by a mechanofusion method using a ball mill. Specifically, ϕ 5 mm zirconia balls were placed in a 250 mL zirconia ball mill pod, the material was fed under an argon atmosphere and treated at 200 rpm for 4 hours to obtain a positive electrode material in which the surface of the composite material particles was coated with the electronic conductor.

### (Preparation of Positive Electrode Mixture)

In a glove box with an argon atmosphere at a dew point of -68°C or lower, 40 g of zirconia balls having a diameter of 5 mm, 0.150 g of the positive electrode material, and 0.050 g of a solid electrolyte (Li₆PS₅Cl manufactured by Ampcera Inc.) were placed in a zirconia container with a capacity of 45 ml, and treated with a planetary ball mill (Premium line P-7 manufactured by Fritsch GmbH) at 370 rpm for 6 hours to obtain a powder of the positive electrode mixture. The composition of the positive electrode mixture was positive electrode material : solid electrolyte = 75:25 (mass ratio).

### (Preparation of Test Cell (All Solid Lithium Secondary Battery))

The battery was prepared in a glove box with an argon atmosphere at a dew point of -68°C or lower. A cylindrical convex punch (10 mm diameter) made of SUS was inserted into one side of a cylindrical tube jig (tube inner diameter of 10 mm, outer diameter of 23 mm, height of 20 mm) made of MACOL, and 80 mg of a solid electrolyte (Li₆PS₅Cl manufactured by Ampcera Inc.) was placed in from the upper side of the cylindrical tube jig. Then, another cylindrical convex punch made of SUS was inserted to sandwich the solid electrolyte and pressed at a pressure of 75 MPa for 3 minutes using a hydraulic press to form a solid electrolyte layer having a diameter of 10 mm and a thickness of about 0.6 mm in the cylindrical tube jig. Next, the cylindrical convex punch inserted from the upper side was once removed, 7.5 mg of the positive electrode mixture prepared above was added to one side surface of the solid electrolyte layer in the cylindrical tube, and the cylindrical convex punch (also serving as a positive electrode current collector) was inserted again from the upper side and pressed at a pressure of 300 MPa for 3 minutes to form a positive electrode active material layer having a diameter of 10 mm and a thickness of about 0.06 mm on one side surface of the solid electrolyte layer. Next, the lower cylindrical convex punch (also serving as a negative electrode current collector) was removed, and a lithium foil (manufactured by The Nilaco Corporation, thickness of 0.20 mm) punched to a diameter of 8 mm and an indium foil (manufactured by The Nilaco Corporation, thickness of 0.30 mm) punched to a diameter of 9 mm were laminated as a negative electrode and put in from the lower side of the cylindrical tube jig so that the indium foil was located on the solid electrolyte layer side. Then, the cylindrical convex punch was inserted again and pressed at a pressure of 75 MPa for 3 minutes to form a lithium-indium negative electrode. In the above-described manner, the test cell (all solid lithium secondary battery) in which the negative electrode current collector (punch), the lithium-indium negative electrode, the solid electrolyte layer, the positive electrode active material layer, and the positive electrode current collector (punch) were laminated in this order was prepared.

### [Example 2]

The test cell was prepared by the same method as in Example 1 described above, except that the composite material particles and the electronic conductor were blended so that the mass ratio of the electronic conductor to the porous conductive material in the composite material particles was 0.05.

### [Example 3]

The test cell was prepared by the same method as in Example 1 described above, except that the composite material particles and the electronic conductor were blended so that the mass ratio of the electronic conductor to the porous conductive material in the composite material particles was 0.1.

### [Example 4]

The test cell was prepared by the same method as in Example 1 described above, except that the composite material particles and the electronic conductor were blended so that the mass ratio of the electronic conductor to the porous conductive material in the composite material particles was 0.2.

### [Example 5]

The test cell was prepared by the same method as in Example 1 described above, except that the composite material particles and the electronic conductor were blended so that the mass ratio of the electronic conductor to the porous conductive material in the composite material particles was 0.5.

### [Example 6]

The test cell was prepared by the same method as in Example 3 described above, except that carbon nanotube (average fiber length of 5 um) was used instead of graphene as the electronic conductor.

### [Example 7]

The test cell was prepared by the same method as in Example 3 described above, except that carbon fiber (average fiber length of 10 um) was used instead of graphene as the electronic conductor.

### [Example 8]

The test cell was prepared by the same method as in Example 1 described above, except that porous carbon (average particle size of 4.8 um, pore size of 1 nm) was used as the porous conductive material.

### [Example 9]

The test cell was prepared by the same method as in Example 1 described above, except that porous carbon (average particle size of 6 um, pore size of 5 nm) was used as the porous conductive material.

### [Example 10]

The test cell was prepared by the same method as in Example 1 described above, except that porous carbon (average particle size of 5 um, pore size of 100 nm) was used as the porous conductive material.

### [Example 11]

The test cell was prepared by the same method as in Example 1 described above, except that porous carbon (average particle size of 5 um, pore size of 500 nm) was used as the porous conductive material.

### [Example 12]

The test cell was prepared by the same method as in Example 3 described above, except that PDOT (3,4-ethylenedioxythiophene) (average longest diameter of 5 um) was used instead of graphene as the electronic conductor.

### [Example 13]

The test cell was prepared by the same method as in Example 1 described above, except that graphene (average longest diameter of 2.5 um) was used as the electronic conductor and that the composite material particles and the electronic conductor were blended so that the mass ratio of the electronic conductor to the porous conductive material in the composite material particles was 15.

### [Comparative Example 1]

The test cell was prepared by the same method as in Example 1 described above, except that acetylene black was used as the porous conductive material instead of porous carbon, that carbon fiber (average fiber length of 10 um) was used as the electronic conductor instead of graphene, and that the composite material particles and the electronic conductor were blended so that the mass ratio of the electronic conductor to the porous conductive material in the composite material particles was 0.1.

### [Comparative Example 2]

The test cell was prepared by the same method as in Example 1 described above, except that porous carbon (average particle size of 4.5 um, pore size of 4 nm) was used as the porous conductive material, and that an electronic conductor was not used.

### <Evaluation Example of Test Cell>

The capacity characteristics, the resistance value, and the cycle durability of the test cell prepared in each of the above Examples and Comparative Examples were evaluated by the following method. Note that the evaluation was conducted in a constant temperature thermostat bath set at 25°C using a charge and discharge test device (HJ-SD8 manufactured by Hokuto Denko KK).

### (Capacitance Characteristics)

The test cell was placed in a thermostat bath, and after the cell temperature became constant, discharging was performed as cell conditioning to a cell voltage of 0.5 V at a current density of 0.2 mA/cm², followed by 2.5 V constant-current constant-voltage charging at the same current density with a cutoff current of 0.01 mA/cm². The capacity value (mAh/g) per mass of the positive electrode active material was calculated from the value of the charge-discharge capacity and the mass of the positive electrode active material contained in the positive electrode obtained after this conditioning charge-discharge cycle 10 was repeated times.

### (Resistance value)

The resistance value was calculated from the IV curve obtained by placing the test cell in a thermostat bath, adjusting the SOC (state of charge) of the cell to 50%, varying the current density to 0.2, 0.4, and 0.8 mA/cm², and performing discharging for 30 seconds. Before voltage application at each current value, charging was performed at 0.2 mA/cm² so that SOC was 50%.

### (Cycle Durability)

The process of discharging at a cutoff voltage of 0.5 V at a current density of 0.05 C after a full charge under the condition of a cutoff current of 0.01 C by 0.05 C to 2.5 V constant-current constant-voltage charging was defined as one cycle. This cycle was repeated 100 times, and the capacity retention rate was determined from the ratio of the 100th discharge capacity to the first discharge capacity.

The results are shown in Table 1 below.

**[Table 1]**

| | Porous conductive material | | | Electron conductor | | | A/B | Mass ratio of electron conductor/porous conductive material | Capacity (relative value) (%) | Resistance (relative value) | Capacity retention rate (relative value) |
|---|---|---|---|---|---|---|---|---|---|---|---|
| | Type | Particle diameter (D50) [µm] | Pore size [nm] <A> | Type | Shape | Size 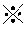 ¹ [µm] <B> | | | | | |
| Example 1 | Porous carbon | 5 | 30 | Graphene | Sheet | 5 | 0.006 | 0.01 | 99.9 | 0.95 | 103 |
| Example 2 | Porous carbon | 5 | 30 | Graphene | Sheet | 5 | 0.006 | 0.05 | 99.5 | 0.91 | 105 |
| Example 3 | Porous carbon | 5 | 30 | Graphene | Sheet | 5 | 0.006 | 0.1 | 99 | 0.8 | 108 |
| Example 4 | Porous carbon | 5 | 30 | Graphene | Sheet | 5 | 0.006 | 0.2 | 98 | 0.74 | 111 |
| Example 5 | Porous carbon | 5 | 30 | Graphene | Sheet | 5 | 0.006 | 0.5 | 95 | 0.72 | 109 |
| Example 6 | Porous carbon | 5 | 30 | CNT | Fibrous | 5 | 0.006 | 0.1 | 99 | 0.79 | 107 |
| Example 7 | Porous carbon | 5 | 30 | Carbon fiber | Fibrous | 10 | 0.003 | 0.1 | 99 | 0.81 | 102 |
| Example 8 | Porous carbon | 4.8 | 1 | Graphene | Sheet | 5 | 0.0002 | 0.1 | 99 | 0.74 | 111 |
| Example 9 | Porous carbon | 6 | 5 | Graphene | Sheet | 5 | 0.001 | 0.1 | 99 | 0.72 | 109 |
| Example 10 | Porous carbon | 5 | 100 | Graphene | Sheet | 5 | 0.02 | 0.1 | 99 | 0.83 | 104 |
| Example 11 | Porous carbon | 5 | 500 | Graphene | Sheet | 5 | 0.1 | 0.1 | 99 | 0.98 | 103 |
| Example 12 | Porous carbon | 5 | 30 | PDOT | Sheet | 5 | 0.006 | 0.1 | 99 | 0.98 | 107 |
| Example 13 | Porous carbon | 5 | 30 | Graphene | Sheet | 2.5 | 0.012 | 15 | 85 | 0.83 | 115 |
| Comparative example 1 | Acetylene black | - | - | VGCF | Fibrous | 10 | - | 1 | 90 | 0.82 | 70 |
| Comparative example 2 | Porous carbon | 4.5 | 4 | - | | - | - | 0 | 100 | 1 | 100 |

| | | | | | | | | | | | |
|---|---|---|---|---|---|---|---|---|---|---|---|
| 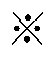 1 The size of an electron conductor shows the average longest diameter in surface direction when the electron conductor has a sheet-shape or the average fiber length when the electron conductor has a fibrous shape. | | | | | | | | | | | |

From the results shown in Table 1, it is found that the present invention can achieve improvement in cycle durability of an electric device that uses the positive electrode active material containing sulfur.

By using graphene as the electronic conductor, a higher capacity retention rate can be obtained. This is considered to be because graphene has a high electron conductivity. In addition, this is considered to be because the graphene, being in sheet shape, can favorably coat the surface of the composite material particles.

As the ratio of the pore size of the porous conductive material to the size of the electronic conductor (the item "A/B" in Table 1) is smaller, the capacity retention rate is improved. This is considered to be because the use of an electronic conductor having a larger size relative to the pore size of the porous conductive material allows favorable coating of the surface of the composite material particles, thereby further ensuring a conductive path between the positive electrode active material overflowing from the pores and the porous conductive material.

Even if the amount of the electronic conductor is relatively small (e.g., 0.01) with respect to the amount of the porous conductive material, the capacity retention rate can be sufficiently improved. This is considered to be because the amount of sulfur that can contribute to the charge-discharge reaction is increased by the presence of the electronic conductor on the surface of the composite material particles even if the amount of the electronic conductor is small. The capacity retention rate tends to be improved as the amount of the electronic conductor is increased.

### Reference Signs List

- 10a: Laminate type battery
- 11': Negative electrode current collector
- 11": Positive electrode current collector
- 13: Negative electrode active material layer
- 15: Positive electrode active material layer
- 17: Solid electrolyte layer
- 19: Single battery layer
- 21: Power-generating element
- 25: Negative electrode current collecting plate
- 27: Positive electrode current collecting plate
- 29: Laminate film
- 100, 100': Positive electrode material
- 110: Porous conductive material (porous carbon)
- 110a: Pore
- 120: Positive electrode active material (sulfur)
- 130: Electronic conductor (graphene)

## Claims

1. A positive electrode material for an electric device, the positive electrode material comprising:
composite material particles containing a positive electrode active material containing sulfur in pores of a porous conductive material; and
an electronic conductor coating a surface of the composite material particles.

2. The positive electrode material for an electric device according to claim 1, the positive electrode material further comprising a solid electrolyte in the pores of the porous conductive material.

3. The positive electrode material for an electric device according to claim 1 or 2, wherein a mass ratio of the electronic conductor to the porous conductive material is more than 0 and less than 1.

4. The positive electrode material for an electric device according to any one of claims 1 to 3, wherein
a shape of the electronic conductor is a fibrous shape, and a ratio of a pore size of the porous conductive material to an average fiber length of the fibrous electronic conductor is more than 0 and less than 1, or
a shape of the electronic conductor is a sheet shape, and a ratio of a pore size of the porous conductive material to an average longest diameter of the sheet-shaped electronic conductor in a surface direction is more than 0 and less than 1.

5. The positive electrode material for an electric device according to any one of claims 1 to 4, wherein at least a part of the solid electrolyte and at least a part of the positive electrode active material containing sulfur are disposed inside the pores of the porous conductive material to be in contact with each other.

6. The positive electrode material for an electric device according to any one of claims 1 to 5, wherein the electronic conductor is at least one selected from a group consisting of conductive carbon and conductive polymer.

7. A positive electrode for an electric device, the positive electrode comprising the positive electrode material for an electric device according to any one of claims 1 to 6.

8. An electric device comprising the positive electrode for an electric device according to claim 7.

9. The electric device according to claim 8, wherein the electric device is an all solid lithium secondary battery.
